# EUROPEAN PATENT SPECIFICATION

(11) **EP 2 948 295 B1**
(45) Date of publication and mention of the grant of the patent: **16.12.2020**
(21) Application number: 14705384.7
(22) Date of filing: 22.01.2014
(51) Int. Cl.: B29C 70/86, B29C 70/54

(54) **METHOD AND APPARATUS AND PARTS FOR USE IN PRODUCTION OF CARBON FIBRE COMPONENTS**
VERFAHREN, VORRICHTUNG UND TEILE ZUR VERWENDUNG IN DER HERSTELLUNG VON KOHLEFASERKOMPONENTEN
PROCÉDÉ ET APPAREIL ET PIÈCES DESTINÉS À ÊTRE UTILISÉS DANS UNE PRODUCTION DE COMPOSANTS EN FIBRE DE CARBONE

(30) Priority: 25.01.2013 GB 201301369
(43) Date of publication of application: 02.12.2015
(73) Proprietor: Penso Holdings Ltd., Coventry, West Midlands CV3 4FX (GB)
(72) Inventor: ROCHE, David, Coventry West Midlands CV2 4DR (GB); THORPE, Jevon Thurston, Coventry West Midlands CV4 8GN (GB); HURCOMBE, Daniel, Wolverhampton West Midlands WV3 8BA (GB)
(74) Representative: Barker Brettell LLP
(86) International application number: PCT/GB2014/050176
(87) International publication number: WO 2014/114936

(56) References cited:
- EP-A1- 1 048 442
- WO-A1-2012/114226
- DE-A1- 19 834 772

## Description

This invention relates to a method of production of carbon fibre components and to apparatus for use in processes for the production of carbon fibre parts. In particular it relates to the production of carbon fibre parts for use in automobiles. It further relates to components that are suitable for use in carbon fibre parts.

A Carbon fibre component or part, in the context of this application, refers to an article of manufacture produced at least in part using one or more layers of fibre reinforced polymeric composite material. Typically this will comprise a composite of carbon fibre filaments and an epoxy resin as the polymer. However, the carbon fibres may be mixed with other filaments in the composite material.

Carbon fibre reinforced composite material is known to be capable of being formed into extremely strong and lightweight components. The carbon fibre provide the strength of the material, being difficult to stretch, while the resin holds the fibres in place. Varying the direction of the fibres enables the properties of the carbon fibre product to be varied. Carbon fibres are typically woven into sheets or mats that are laid one on top of the other in a mold and then soaked in epoxy which is heat cured and allowed to cure to form a rigid finished composite.

The manufacture of parts in carbon fibre using traditional techniques is very time intensive and as such has mostly been limited to high value, low volume sportscar manufacture. It has found its way into more mainstream automobiles in the form of non-structural components such as bootlids or bonnets or seat parts, but again the manufacturing process has been slow making these parts expensive to produce.

The most widely used method of manufacturing components for automobiles, which are often large components, is to initially weave the carbon fibres into flexible sheets or mats of material that can be laid up in a mold in the shape of the final product. The mold is then filled with epoxy resin before it is heated to cause the epoxy to melt and then cool where it is allowed to harden. To ensure there are no air bubbles in the finished component, the laid up sheets impregnated with epoxy are placed in a sealed bag that is evacuated using a pump, and the bag is then placed in an autoclave to cure the material.

Efforts have been made to use a press instead of the vacuum bag, the press comprising a mold and a die defining male and female parts. The carbon fibre is laid up directly into the press and the press closed and then heated in an autoclave as with the bag method. So far only very simple components have been made this way and there have been many problems with pressed parts such as inclusion of bubbles in the finished parts. This can lead to a poor surface finish making parts unsuitable for uses in which the surface will be visible.

In another approach, carbon fibre is laid up over a former along with resin, and then lifted carefully from the former to be placed in a press. This causes problems because the shape of the material will often become deformed when moving into the press, leading to a poor finish that might mean the product has to be rejected.

Although carbon fibre parts can be made very strong by suitable orientation of the fibres, it can be difficult to fix other objects onto the parts because the pull out strength of the carbon fibre matrix is relatively low. Because the parts are made by laying up thin sheets, there will generally not be sufficient thickness to accommodate a fastening, such as a screw, over the full length of the screw.

Where there is a requirement for fastening parts together using screws, it is known to embed within the carbon fibre part an insert comprising a solid block of aluminium, into which a screw can be fixed. To embed the insert the part is typically produced in several stages. In a first stage one side of the part is layed up from carbon fibre sheet. The insert is then placed on the sheets and covered with a protective barrier material before the barrier and insert and covered by one or more layers of carbon fibre material. This is then heated as required to fully form the part. A final post machining stage is then carried out to remove part of the carbon fibre covering the insert so that it is exposed, a bore hole drilled and a fixing for a bolt or screw is threaded or otherwise inserted into the bore. DE-A-19834772 discloses the features of the preambles of claims 1 and 8 respectively.

The applicant has appreciated that this traditional process is both labour intensive and time consuming.

The present invention is aimed at ameliorating some of the problems of prior art carbon fibre component manufacture which includes one or more inserts.

According to a first non-claimed aspect, the invention provides a carbon fibre part comprising:
an outer skin formed from at least two layers of carbon fibre material, and an insert located inside the outer skin, the insert comprising a block that carries a protective coating of a material that isolates the block from the carbon fibre material.

By coating we mean that the block is provided with a layer of material that is bonded physically to the block or that the outermost layer of the block has been treated chemically to form an integral layer, penetrating for a depth into the surface of the block. Generally the term coating is intended to refer to a layer which has been actively added to the block in a processing step, rather than referring to any naturally produced coating such as may occur over time due to natural oxidation. The coating should be chosen so that it prevents any chemical reaction between the block and then carbon fibre and as such will typically form a continuous outer layer with no discontinuities.

The coating may be chemically or physically secured to the block. For instance the coating may react with the block to form a bond. Alternatively the coating may be physically secured using a process such as heat shrink wrapping.

The insert may comprise an aluminium block or an aluminium alloy block. It may comprise another metal, for example titanium, or magnesium or an alloy or other material such as steel. It may be a non-metal such as nylon.

The insert, in use, provides a mass into which a fastener can be inserted to allow the part to be securely fixed to other parts or for other parts to be securely fixed to the carbon fibre part. The insert may be adapted to receive a fastener, such as screw or bolt, and provide a pull out force of at least 5KN, or at least 10KN or perhaps at least 20KN.

The block may have two opposed ends connected by one or more side walls, the periphery of at least one end being chamfered at its connection to the one or more walls.
The outer skin in the vicinity of the chamfer may be provided with a preformed hole with the edges of the hole being aligned with and engaging the chamfered part of the insert, the holes being formed in the skin before the insert is surrounded by the skin.

Preferably the block comprises a cylinder, and as such has only one side wall. It may be a distorted cylinder, in that it may have a cross section that is not perfectly circular.

The block may comprise a unitary body of alloy.

The coating may comprise a layer of plastic that is overmolded onto the alloy before the insert is encased by the outer shell.

The insert may include a pre-formed recess that is formed in the insert before the insert is surrounded by the outer skin. The recess may comprise an elongate bore. The inside of the bore may define a thread, or a threaded liner may be fixed within the bore. This may be formed or fixed inside the bore before the insert is located within the outer skin.

The carbon fibre part may include a resin which impregnates the layers of carbon fibre material to form a rigid matrix.

The carbon fibre part may comprise a part of an automobile, such as a body part or a non-structural part of an automobile. It may comprise a part for non-automotive use.

The part may comprise a pressed carbon fibre part in which the layers of carbon fibre material have been impregnated with a resin and heated and compressed during manufacture of the part.

According to the invention, there is provided a carbon fibre part comprising: an outer skin formed from at least two layers of carbon fibre material; and an insert located inside the outer skin; the insert comprising a block having opposing ends and at least one side wall, one of the ends being alignable with a hole that is provided in the outer skin prior to assembly of the outer skin around the insert during manufacture of the carbon fibre part, wherein the end of the insert which is adjacent the hole overlaps the edge of the hole around the entire perimeter of the hole, wherein the block includes a chamfered edge with the chamfer overlapping the edge of the hole, and the region of the end of the block within the chamfer is completely exposed to the outside of the carbon fibre part by the hole.

Of course, by saying the insert is located inside the part the skilled person will understand that this does not exclude a part of the insert extending outside of the carbon fibre skin. The term inside is used to define a part that is generally located inside the skin, partially encapsulated, with a part of the block exposed through or protruding from the skin.

The hole may be stamped or pressed or cut form the outer skin prior to assembly of the carbon fibre part.

The part may include more than one block, each one aligned with a preformed hole in the outer skin.

The part may include any of the features described in relation to the first non-claimed aspect.

According to a second non-claimed aspect, there is provided an insert for use within a carbon fibre part comprising a metal or metal alloy block coated with a material that isolates the block from any carbon fibre material when in use inside the carbon fibre part.

In yet another non-claimed aspect there is provided an insert for use within a carbon fibre part comprising a metal of metal alloy block defining at least one end face, the end face including a chamfer.

The insert may comprise an aluminium or aluminium alloy block.

The block may have two opposed ends connected by one or more side walls, the periphery of at least one end including a chamfered edge.

The chamfered edge may define a step between and end face of the insert and a surrounding shoulder set back from the end face. In use, the shoulder and chamfer traps the edge of a hole in an outer skin of a carbon fibre part during manufacture, and the pressure of the chamfer on the edge of the hole can produce a neat finish to the edge of the carbon fibre without the need for any post machine work.

Preferably the block comprises a cylinder, which may have a generally uniform cross section or may be tapered to form a conical or truncated conical, or frusto-conical,shape. It may have a circular cross section at any point along the length of the block and as such has only one side wall.

The block may comprise a unitary body of aluminium or an alloy of aluminium.

The coating may comprise a layer of plastic material that is overmolded onto the alloy before the insert is encased by the outer shell.

The insert may include a pre-formed recess that is formed in an end face of the insert before the insert is surrounded by the outer skin. The recess may comprise an open ended elongate bore that extends perpendicular to the end face of the insert. It may extend from the end that is chamfered. A threaded liner may be located securely in the recess for receiving a bolt or screw post manufacture. Alternatively the recess may be tapped out to form a thread along at least a part of the recess.

The insert may be provided with at least one anti-rotation feature that resists rotation of the insert about an axis passing through the centre of the pre-formed bore. This may comprise a key such as a protruding rib or lug or set of ribs or lugs. In use these embed in the carbon fibre material.

According to a further non-claimed aspect, there is provided a method of fabricating a carbon fibre part comprising the steps of:
forming a first part of an outer skin of the part from one or more sheets of carbon fibre material;
placing on the first part and insert comprising a block coated with a coating, Forming a second part of the outer skin of the part from one or more additional sheets of carbon fibre material so that the first and second parts enclose the inserts to form a part finished product; and
processing the part finished carbon fibre part by applying at least one of heat and pressure.

According to a further aspect, the invention provides a method of fabricating a carbon fibre part comprising the steps of:
forming a first part of an outer skin of the part from one or more sheets of carbon fibre material;
forming a hole in the material before or after the first part of the skin is formed and prior to subsequently placing on the first part an insert comprising a block having an end face with a chamfer in which the chamfer defines a step between an end face of the insert and a surrounding shoulder set back from the end face;
forming a second part of the outer skin of the part from one or more additional sheets of carbon fibre material so that the first and second parts enclose the inserts to form a part finished product; and
processing the part finished carbon fibre part by applying at least one of heat and pressure.

The method may include adding resin to the carbon fibre material during assembly of the part finished product prior to applying the heat or pressure, or heat and pressure.

The method may comprise supporting the part finished product in a bolster of a press, or in a mold which may be placed in a press. It may comprise placing the part finished product in a vacuum bag and placing the bag in an autoclave.

The method may comprise placing on the first part an insert that has been precoated with a coating.

The method may comprise a pre-step of forming at least one hole in the material used to form the first part of the product and placing the insert on the first part so that an end face of the insert is aligned with the hole.

The shape and size of the hole may match the shape and size of the end of the insert so that the end of the insert overlaps slightly the edge of the hole all the way round the hole.

The method may comprise laying up the material for the first part on a mold or other support, such as a bolster of a press, which includes a locating peg, the peg passing through the hole in the material and engaging in a recess preformed in the insert. The peg helps orientate and locate the material and also the insert.

The method may comprise placing the peg into the insert prior to adding resin to the carbon fibre material, the peg forming a seal to keep the resin out of the recess.

The method may comprise leaving the peg in the recess in the insert of the part finished product during the subsequent steps of applying pressure and/or heat.

The method may beneficially comprise steps of forming the part formed product in or on a a removable support means suitable for supporting the laid up carbon fibre material, the support being movable between an open position for use outside of a press when laying up the material and a closed position for use in a press in which the support means supports the laid up material to ensure that the material is located securely in the press.

The method may comprise applying pressure to the part formed part by placing the support means in a press having a bed for receiving a bolster, and a means for supporting a press part or die above the bolster and for providing relative movement between the bolster and press part during a pressing operation; a bolster suitable for insertion into the press and defining a first press surface; and a press part suitable for insertion into the press and defining a second press surface that faces towards the first press surface.

The method may comprise placing the support means between the bolster and the press part during a pressing operation in which the bolster and press part are pressed together by the press in turn to apply a compressive force from the press surfaces onto the material gripped by the support means.

The support means may include a mold comprising at least two separable mold parts, one of the mold parts having an outer surface that is generally complimentary to the first press surface of the bolster and the other one of the mold parts having an outer surface that is generally complimentary to the second press surface of the press part, the mold parts being shaped so that when closed together they define a space therebetween that substantially matches the finished shape of at least one carbon fibre component that is to be produced by the apparatus.

The mold or the bolster may be fitted with one or more of the pegs that are to be used to locate the insert or inserts. These may be removable from the mold or bolster.

There will now be described, by way of example only several embodiments of apparatus and methods for manufacture of carbon fibre components in accordance with the present invention of which:
**Figure 1** shows in plan a press that can be used to manufacture carbon fibre parts according to an embodiment of the invention;
**Figure 2** is an exploded view of the various parts that are to be inserted into the press in the order in which they are placed with the press part at the top and the bolster at the bottom; and
**Figure 3** shows an embodiment of an insert that forms an internal part of a carbon fibre part that can be produced using the apparatus of Figure 2.
**Figure 4** shows the various stages of production of a carbon fibre part according to an exemplary embodiment of a method within the scope of an aspect of the present invention; and
**Figure 5** shows in cross section a finished carbon fibre product that includes two of the inserts of Figure 3.

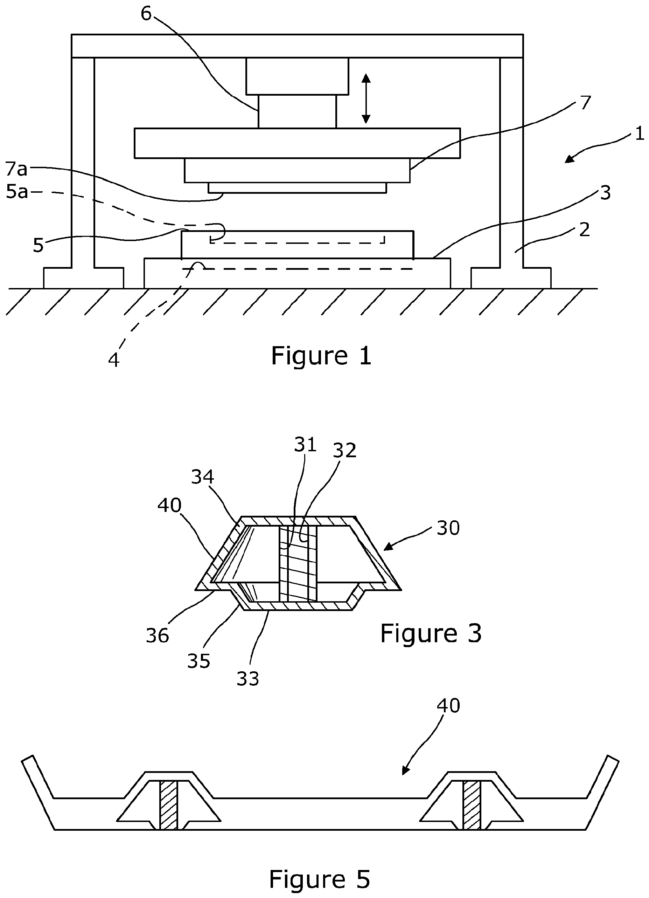

As shown in Figure 1, a hydraulic press 1 which can be used to form an embodiment of an apparatus of the present invention comprises a press frame 2, a bed 3 having a recess 4 into which a removable bolster 5 can be inserted, and a ram 6 to which a removable press part 7, or die, can be fixed. The frame 2 supports the ram 6, and the ram 6 supports the press part 7 above the bolster 5. A lockable protective cage may be provided around the press frame to ensure that an operator cannot become trapped in the press when it is in use.

The removable bolster 5 and the removable press part 7 each comprise relatively massive metal blocks, typically of aluminium. Each one has a respective press surface 5a,7a, the press surface of the bolster facing upwards when it is secured to the bed, and the press surface of the removable press part faces downwards towards the bolster.

In operation of the hydraulic press 1, the bed and bolster 5 remain stationary and the press part 7 is moved by the ram. Initially, in a pre-use position, the ram holds the press part a distance above the bolster, typically about a metre to allow access by a robot if required, to allow access to the press surfaces. This is shown in Figure 1.

During pressing the ram forces the press part 7 down towards the bolster to reduce the spacing of a few mms (perhaps 20 percent thicker than the finished size of a carbon product that is being manufactured). The actual spacing during use will depend on the part that is being pressed as will be explained later. Of course, other types of press could be used within the scope of the invention. For example, the bed may move and the upper part may be fixed, or both the bed and upper part may move.

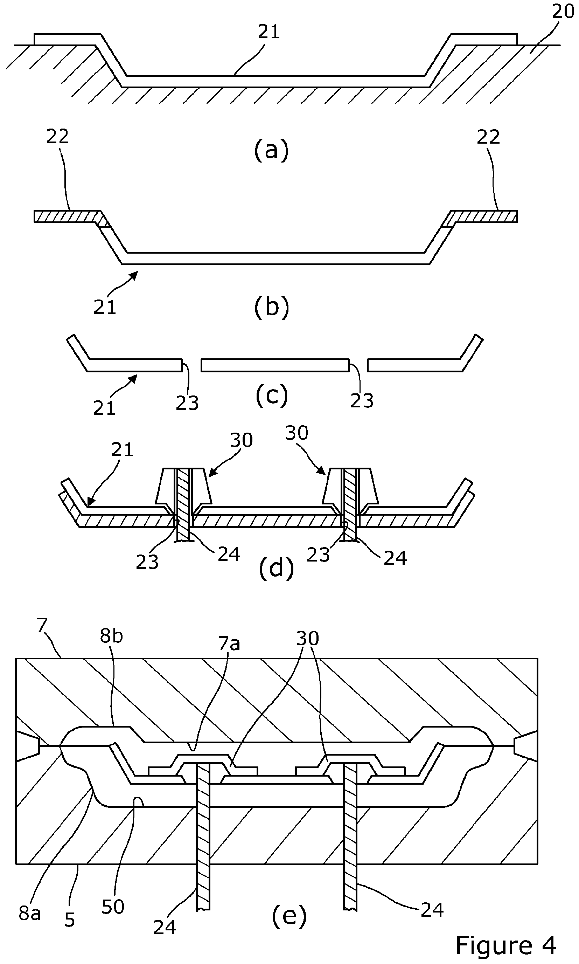

The press surfaces 5a, 7a of the bolster and press part are shaped so that with the press in the pressing position a space is defined between the surfaces into which carbon fibre material can be placed. The material will be supported by a support means that optionally includes a mold 8. An exemplary mold 8 of a support means is shown in Figure 4 of the drawings. It comprises two mold halves, 8a and 8b, although each mold half could be formed from multiple pieces.

The mold 8 and bolster and press part are specifically tailored to each other. The bolster has a recess in the press surface 5a into which a half of the mold can be placed and the press part has a protrusion on its surface 7a which at least partially protrudes into the recess when the press is in the use position during pressing. Generally the space defined between the bolster and press part may correspond to an enlarged version of the finished shape of one or more carbon fibre components that are to be manufactured. Typically the space may be between 10mm and 30mm oversized in all dimensions compared with the shape of the final product or products.

The mold in the example comprises a pair of matching seperable mold parts 8a and 8b that can be inserted and removed from the press. One mold part defines a lower half of the mold and the other an upper half. The shape of the two mold parts depends on the shape of the carbon fibre part, or parts, that are to be produced using the mold parts. Each mold part 8a,8b comprises a thin walled rigid shell that has an inner surface that corresponds to a negative of a respective side (either an A side of B side) of the carbon fibre part that is to be produced. When the mold is closed the space between the two halves of the mold roughly corresponds to the shape of the part that is to be produced, the spacing between the two mold halves being set by the thickness of the part to be produced. Each mold half typically is relatively rigid and has a relatively thin cross section and may itself be made by stamping or pressing from a sheet of metal, by casting or machining from a solid billet. The thickness of the mold parts will typically be between 1mm and upwards, perhaps up to 3mm or even up to 10mm or so, so that when inserted into the press the outer surface of the mold parts fully contacts the press surfaces to enable thermal conduction between the bolster and press part and the mold.

Associated with the mold 8 is a clinch frame 18. The clinch frame forms part of the support means. This is shown in Figure 4. The function of the clinch frame is to grip the material that is being used to form the part, and where molds are provided it also performs a function of fixing the two parts 8a, 8b of the mold together.

The clinch frame 18 has an upper part and a lower part that connect together around the edges of the mold parts and in so doing pinch some of the material laid up in the mold between the two parts of the frame to help control the shape of the finished carbon fibre component, and to provide a convenient component by which the mold parts can be lifted and moved in and out of the press. It is envisaged that many support means- molds and clinch frames- may be provided for use with one press, perhaps being shaped differently internally to allow different carbon fibre parts to be manufactured, but a single common shape of clinch frame may be used. Of course, there may be differences between clinch frames depending on where the material is to be gripped, so there may be reasons for having clinch frames that are only suitable for use with specific molds. Or course, if the outer shape of the mold varies then different shaped bolster and press parts may then be needed to receive the mold.

The press includes recesses in the surface of the bolster and press part into which the frame, typically thicker than the optional mold, will fit as the press is closed. The recesses held with location of the frame in the correct position, and also ensure the frame does not impede the engagement of the press with the material.

The lower part of the mold 8 also includes two bores which locate and guide respective pegs 24. These pegs 24, as will be explained later, help locate inserts which are included in the finished carbon fibre part.

Figure 3 shows a typical insert 30 that will be included in a finished carbon fibre part. A typical finished part 40 including two inserts 30 is shown in cross section in Figure 5. The part in this example has a uniform cross section, but the cross section could vary at different positions across the width or along the length of the part.

The insert 30 comprises a block of aluminium or aluminium alloy which is covered by a protective coating 40 such as titanium boride or a plastic material, for instance a powder coating. The coating 40 helps prevent the aluminium alloy coming into contact with the carbon fibre and thereby prevents any unwanted chemical or electro chemical reactions that may otherwise occur. As shown the coating covers the entire surface of the insert in this example.

The insert 30 is generally cylindrical and tapers from a point near its base towards the top at an angle of around 30 degrees. The top part of the block therefore forms a conical form which is terminated with a flat top 34 defining one end face of the insert. The other end of the block is also a flat surface 33 and around the edge of that surface a chamfer 35 is provided. As shown the chamfer 35 is inset from the edge of the insert so that end face comprises a raised, flat, central portion 33 surrounded by a flat edge or shoulder 36 that joins the flat surface 33 through the chamfer.

A recess in the form of a bore 31 is provided in the block that extends all the way from one end face through to the other, and this accommodates a threaded liner 32 that is a press fit in the bore. The bore and liner are formed in the insert before it is used to make a carbon fibre part.

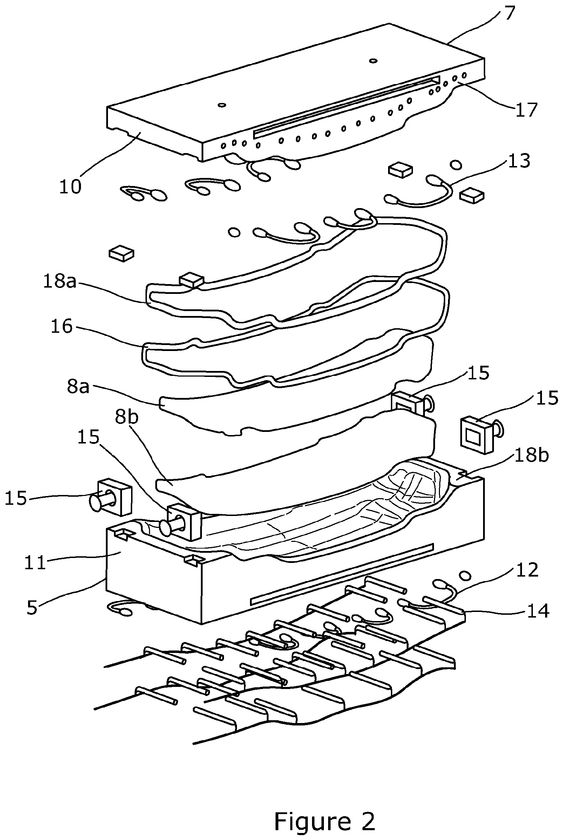

Figure 2 is an exploded view of the parts of the apparatus and their relative positions, the view being exploded in the vertical direction. The bolster 5 and press part 7 each contain a set of through bores 10,11 which define passageways that form a part of a temperature control circuit. The open ends of the passageways 11 in the bolster are connected together using multiple connecting lines 12 to form a flow path for heated or cooled fluid. The connected passageways are terminated with an input port and an output port which can be connected to a fluid source and outlet when inserted into the press. Similarly the open ends of the passageways 10 in the press part and connected by multiple connecting lines 13 and terminated in an input port and output port which can be connected to the same, or a different, source of heated or cooled fluid when connected to the press.

In addition to the fluid heating and cooling, the bolster 5 is provided with a set of resistive heating elements 14 and connectors that enable them to be connected to a suitable electrical supply when connected to the press during pressing. Resistive heating elements may also be provided in the press part but are not shown in Figure 6.

In use the heating elements 14 are used to rapidly raise the temperature of the bolster and optionally the press parts. This heating can be applied alongside the use of heating fluid in the fluid passages. Unlike fluid heating electrical heating can achieve much more rapid heating of the bolster 5 and optionally the press part 7, but resistive elements cannot be used to cool them down. When finished cooling will continue to post cooling.

The temperature control circuit selectively applies heated or cooled fluid and applies resistive heating to the bolster and/or press part to cause the bolster and press part to achieve a desired temperature during a pressing operation. Typically this will vary from around 60 to 80 degrees at the start of pressing to around 120 or more degrees during pressing. The exact temperatures will depend on the curing properties of the resin used in the carbon fibre material.

The press 1 also includes a set of four press setting parts 15. The press setting parts 15 in this embodiment comprise metal blocks of specified dimensions that are each received in respective recesses provided towards the four corners of the bolster. When the press part is pressed down towards the bolster, the press setting parts initially start to move into corresponding recesses in the press part, until eventually the press part is prevented from moving further by the press setting parts that are then wedged between the bolster and press part. The height of the parts determines the spacing between the bolster and press part when fully pressed. These press setting parts can be used to provide accurate control of the press position when pressing.

A proposed method of use of the apparatus to produce a carbon fibre component will now be described.

In a first step, the press is loaded with the bolster and the press part that match a support means. In this example the support means comprises a clinch frame and a two part mold. The inlet and outlet of the temperature control circuit are then connected to the fluid supplies and the temperature control circuit preheats the bolster and press part by circulating heated fluid through the passages. Press setting parts are placed in the recesses in the bolster which are of a size chosen according to which carbon fibre parts are being manufactured.

In an exemplary method illustrated in Figures 4(a) to (e), a former 20 which has an upper surface corresponding to the shape of an outer surface of a finished part is provided. One of the mold parts could be used as the former. Carbon fibre material 21 is pressed into the former to form one half of the outer skin of the finished part. Resin is added to the layers of material and allowed to partially cure so that the material and resin become a self-supporting part formed part. This is shown in Figure 4(a). At this point the material should extend beyond what will be the edges of the finished part that is being made.

The partially cured matrix of carbon fibre and resin 21 is removed from the former 20 as shown in Figure 4(b). The scrap edges 22 of the material are neatly trimmed at this stage to ensure that the finished part will have a good edge finish. Because the outer skin is not fully cured it is relatively easy to cut. Two holes 23 are then cut into the trimmed part formed par as shown in Figure 4(c). Care must be taken to ensure that the holes are cut in the right place, and a template (not shown) may be used to indicate the position of the hole. This is easier if the holes are cut after initial trimming of the part formed part.

The cut and trimmed piece is then placed into the a first part of the mold 8a as shown in Figure 4(c) so that each of the holes 23 fits over a respective locating peg 24 that extends through the mold wall. If the mold is to be used as the initial former these pegs will need to have been removed during that initial stage and then located in position for this later stage. The pegs 24 help to show where the material should be placed in the mold.

Once the partially cured outer skin is in the mold, two inserts such as the one shown in Figure 3 are positioned on the carbon fibre with a peg located snugly in the bore of each of the insert. In this position the chamfered edge will sit on top of the edge of the hole in the material, so that the material is wedged under the outer rim of the insert.

Additional layers of carbon fibre material are then added onto the top of the partially formed outer skin to enclose the insert. This material will form the rest of the outer skin of the finished part and is shown in Figure 4(e).. Additional resin is added to the material, which is prevented from entering the recess in the insert by the pegs 24.

The mold 8a, 8b is then clamped into a clinch frame and the clinch frame and lifted into the press. This is shown in Figure 4(e). A pressing operation is then performed at an elevated temperature to further cure the resin and to compress the material, removing any voids that may otherwise be present in the finished part.

The part is then removed from the press using the clinch frame, and can be removed from the mold or left in the mold and subjected to one or more additional heat cycles to finish the curing process.

Once removed from the mold, the peg is withdrawn from the insert. This may be done before or after removing the part from the mold. Because the peg is a snug fit in the insert there is little risk that the recess in the insert will be blocked by resin.

Many alternatives are possible. The hole in the material may be pre-cut before the material is layed up to form the outer skin. The initial outer skin does not need to be partially cured before the insert is added. This is especially the case where a mold is used. Partial curing allows the mold to be omitted and the partially cured outer skin supported only by a clinch frame.

Because the insert is pressed together with the material, the material will form a neat edge where is meets the chamfer leaving the end of the insert partially exposed. There is no need to perform any post-machining to remove excess material that would cover the end of the insert. Because the insert has a bore pre-formed in it before assembly of the part there is no need for post machining of the hole. The pegs ensure accurate positioning of the hole, and the clinch frame also helps ensure the hole is in the right position relative to the edges of the finished part.

The skilled person will understand that various modifications can be made within the scope of the present invention. For instance, as shown in Figure 7 a mold can be provided which allows three carbon fibre components to be made in one pressing operation. This includes three interior spaces, each one corresponding to a finished shape of one carbon fibre part. Note that Figure 7 only shows on half of the alternative mold. Where the outer surface of the mold has been changed then it will require a different bolster and press part, to ensure even pressure is applied onto the outer surfaces of the mold halves to squeeze them together during pressing.

## Claims

1. A carbon fibre part (40) comprising:
an outer skin formed from at least two layers of carbon fibre material; and
an insert (30) located inside the outer skin;
the insert (30) comprising a block having opposing ends and at least one side wall, one of the ends being alignable with a hole that is provided in the outer skin prior to assembly of the outer skin around the insert (30) during manufacture of the carbon fibre part (40),
wherein the end of the insert (30) which is adjacent the hole overlaps the edge of the hole around the entire perimeter of the hole, **characterized in that**
the block includes a chamfered edge (35) with the chamfer (35) overlapping the edge of the hole, and the region (33) of the end of the block within the chamfer (35) is completely exposed to the outside of the carbon fibre part (40) by the hole.

2. A carbon fibre part (40) according to claim 1 in which the insert (30) comprises an aluminium or aluminium alloy block.

3. A carbon fibre part (40) according to claim 2, wherein the block has a coating with a material that isolates the block from any carbon fibre material when in use inside the carbon fibre part (40).

4. A carbon fibre part (40) according to claim 3 in which the coating comprises a layer of plastic material that is overmolded onto the alloy.

5. A carbon fibre part (40) according to any preceding claim which further comprises a pre-formed recess that is formed in an end face (33) of the insert (30), the recess comprising an open ended elongate bore (31) that extends perpendicular to the end face (33) of the insert (30) for receiving a fastener.

6. A carbon fibre part (40) according to any preceding claim which further includes at least one anti-rotation feature that resists rotation of the insert (30) about an axis passing through the centre of the pre-formed bore (31) when the insert (30) is in a position of use within a carbon fibre part (40).

7. A carbon fibre part (40) according to any preceding claim that includes more than one insert (30), each insert (30) being alignable with a preformed hole in the outer skin.

8. A method of fabricating a carbon fibre part (40) comprising the steps of:
forming a first part of an outer skin of the part (40) from one or more sheets of carbon fibre material;
forming a hole in the material before or after the first part of the skin is formed and prior to subsequently placing on the first part an insert (30) comprising a block having an end face (33)
forming a second part of the outer skin of the part (40) from one or more additional sheets of carbon fibre material so that the first and second parts enclose the inserts (30) to form a part finished product; and
processing the part finished carbon fibre part by applying at least one of heat and pressure, **characterized in that** the block has a chamfer (35) which defines a step between the end face (33) and a surrounding shoulder (36) set back from the end face (33).

9. A method according to claim 8 which includes a step of adding resin to the carbon fibre material during assembly of the part finished product prior to applying the heat or pressure, or heat and pressure.

## Patentansprüche

1. Kohlefaserteil (40), umfassend:
eine Außenhaut, die aus mindestens zwei Schichten aus Kohlefasermaterial gebildet ist; und
einen Einsatz (30), der sich innerhalb der Außenhaut befindet;
wobei der Einsatz (30) einen Block mit gegenüber liegenden Enden und mindestens einer Seitenwand umfasst, wobei eines der Enden mit einem Loch, das in der Außenhaut bereitgestellt ist, vor der Montage der Außenhaut um den Einsatz (30) herum während der Fertigung des Kohlefaserteils (40) ausrichtbar ist,
wobei das Ende des Einsatzes (30), das sich neben dem Loch befindet, den Rand des Lochs um den gesamten Umfang des Lochs herum überlappt,
**dadurch gekennzeichnet, dass**
der Block eine Abschrägung (35) einschließt, wobei die Schräge (35) den Rand des Lochs überlappt, und
die Region (33) des Endes des Blocks innerhalb der Schräge (35) gegenüber der Außenseite des Kohlefaserteils (40) durch das Loch vollständig exponiert ist.

2. Kohlefaserteil (40) nach Anspruch 1, wobei der Einsatz (30) einen Block aus Aluminium oder Aluminiumlegierung umfasst.

3. Kohlefaserteil (40) nach Anspruch 2, wobei der Block eine Beschichtung mit einem Material aufweist, welches bei Gebrauch innerhalb des Kohlefaserteils (40) den Block von jeglichem Kohlefasermaterial isoliert.

4. Kohlefaserteil (40) nach Anspruch 3, wobei die Beschichtung eine Schicht aus Kunststoffmaterial umfasst, die auf die Legierung umspritzt worden ist.

5. Kohlefaserteil (40) nach einem der vorhergehenden Ansprüche, das des Weiteren eine vorgebildete Aussparung umfasst, die in einer Endfläche (33) des Einsatzes (30) gebildet worden ist, wobei die Aussparung eine längliche Bohrung (31) mit offenem Ende umfasst, die sich senkrecht zu der Endfläche (33) des Einsatzes (30) erstreckt, um ein Befestigungsmittel aufzunehmen.

6. Kohlefaserteil (40) nach einem der vorhergehenden Ansprüche, das des Weiteren mindestens ein Antirotationsmittel einschließt, welches Rotation des Einsatzes (30) um eine Achse Widerstand entgegensetzt, welche die Mitte der vorgebildeten Bohrung (31) durchläuft, wenn sich der Einsatz (30) in der Gebrauchsposition innerhalb eines Kohlefaserteils (40) befindet.

7. Kohlefaserteil (40) nach einem der vorhergehenden Ansprüche, das mehr als einen Einsatz (30) einschließt, wobei jeder Einsatz (30) mit einem vorgebildeten Loch in der Außenhaut ausrichtbar ist.

8. Verfahren zum Fertigen eines Kohlefaserteils (40), umfassend die Stufen:
Bilden eines ersten Teils einer Außenhaut des Teils (40) aus einer oder mehreren Lagen aus Kohlefasermaterial;
Bilden eines Lochs in dem Material, bevor oder nachdem das erste Teil der Haut gebildet worden ist, und vor dem nachfolgenden Platzieren eines Einsatzes (30), der einen Block mit einer Endfläche (33) umfasst, auf dem ersten Teil;
Bilden eines zweiten Teils der Außenhaut des Teils (40) aus einer oder mehreren zusätzlichen Lagen aus Kohlefasermaterial, so dass das erste und das zweite Teil die Einsätze (30) umschließen, um ein teilfertiges Produkt zu bilden; und
Verarbeiten des teilfertigen Kohlefaserteils durch Anwenden von mindestens einem von Wärme und Druck,
**dadurch gekennzeichnet, dass** der Block eine Schräge (35) aufweist, die eine Stufe zwischen der Endfläche (33) und einer umgebenden Schulter (36) definiert, die von der Endfläche (33) zurückgesetzt ist.

9. Verfahren nach Anspruch 8, das eine Stufe des Zufügens von Harz zu dem Kohlefasermaterial während der Montage des teilfertigen Produkts vor dem Anwenden von Wärme oder Druck oder Wärme und Druck einschließt.

## Revendications

1. Pièce en fibres de carbone (40) comprenant :
une peau externe formée à partir d'au moins deux couches de matériau en fibres de carbone ; et
une pièce rapportée (30) située à l'intérieur de la peau externe ;
la pièce rapportée (30) comprenant un bloc ayant des extrémités opposées et au moins une paroi latérale, une des extrémités étant alignable avec un trou qui est ménagé dans la peau externe avant l'assemblage de la peau externe autour de la pièce rapportée (30) pendant la fabrication de la pièce en fibres de carbone (40),
l'extrémité de la pièce rapportée (30) qui est adjacente au trou chevauchant le bord du trou autour du périmètre entier du trou, **caractérisée en ce que**
le bloc comporte un bord chanfreiné (35) avec le chanfrein (35) chevauchant le bord du trou, et la région (33) de l'extrémité du bloc à l'intérieur du chanfrein (35) est totalement exposée à l'extérieur de la pièce en fibres de carbone (40) par le trou.

2. Pièce en fibres de carbone (40) selon la revendication 1 dans laquelle la pièce rapportée (30) comprend un bloc d'aluminium ou d'alliage d'aluminium.

3. Pièce en fibres de carbone (40) selon la revendication 2, dans laquelle le bloc a un revêtement avec un matériau qui isole le bloc de tout autre matériau en fibres de carbone lorsqu'il est utilisé à l'intérieur de la pièce en fibres de carbone (40).

4. Pièce en fibres de carbone (40) selon la revendication 3 dans laquelle le revêtement comprend une couche de matériau plastique qui est surmoulé sur l'alliage.

5. Pièce en fibres de carbone (40) selon une quelconque revendication précédente qui comprend en outre une encoche préformée qui est formée dans une face d'extrémité (33) de la pièce rapportée (30), l'encoche comprenant un alésage allongé à extrémités ouvertes (31) qui s'étend perpendiculairement à la face d'extrémité (33) de la pièce rapportée (30) pour recevoir une fixation.

6. Pièce en fibres de carbone (40) selon une quelconque revendication précédente qui comporte en outre au moins un élément antirotation qui résiste à une rotation de la pièce rapportée (30) autour d'un axe passant par le centre de l'alésage préformé (31) quand la pièce rapportée (30) est dans une position d'utilisation à l'intérieur de la pièce en fibres de carbone (40).

7. Pièce en fibres de carbone (40) selon une quelconque revendication précédente qui comporte plus d'une pièce rapportée (30), chaque pièce rapportée (30) étant alignable avec un trou préformé dans la peau externe.

8. Procédé de fabrication d'une pièce en fibres de carbone (40) comprenant les étapes de :
formation d'une première partie d'une peau externe de la pièce (40) à partir d'une ou plusieurs feuilles de matériau en fibres de carbone ;
formation d'un trou dans le matériau avant ou après que la première partie de la peau a été formée et avant la mise en place ultérieure, sur la première partie, d'une pièce rapportée (30) comprenant un bloc ayant une face d'extrémité (33) ;
formation d'une deuxième partie de la peau externe de la pièce (40) à partir d'une ou plusieurs feuilles supplémentaires de matériau en fibres de carbone de telle sorte que les première et deuxième parties enferment les pièces rapportées (30) pour former un produit partiellement fini ; et
traitement de la pièce en fibres de carbone partiellement finie par application de chaleur et/ou de pression, **caractérisé en ce que** le bloc a un chanfrein (35) qui définit une marche entre la face d'extrémité (33) et un épaulement environnant (36) en retrait par rapport à la face d'extrémité (33).

9. Procédé selon la revendication 8 qui comporte une étape d'ajout de résine au matériau en fibres de carbone pendant l'assemblage du produit partiellement fini avant l'application de chaleur ou de pression, ou de chaleur et de pression.
